# EUROPEAN PATENT APPLICATION

(11) **EP 0 607 460 A1**
(43) Date of publication of application: **27.07.1994**
(21) Application number: 94906730.0
(22) Date of filing: 10.08.1993
(51) Int. Cl.: G02F 1/315, G02F 1/19

(54) **OPTICAL SWITCH**

(30) Priority: 10.08.1992 JP 212814/92
(71) Applicant: SUMITOMO ELECTRIC INDUSTRIES, LIMITED, Osaka 541 (JP); NIPPON TELEGRAPH AND TELEPHONE CORPORATION, Tokyo 110 (JP)
(72) Inventor: HOSOYA, Toshifumi, Yokohama Works,, Sakae-ku, Yokohama-shi, Kanagawa 244 (JP); YAMANISHI, Toru, Yokohama Works,, Sakae-ku, Yokohama-shi, Kanagawa 244 (JP); KOBAYASHI, Yuji, Yokohama Works,, Sakae-ku, Yokohama-shi Kanagawa 244 (JP); SATO, Makoto, Ibaraki 312 (JP)
(74) Representative: Görg, Klaus, Dipl.-Ing.
(86) International application number: JP9301125
(87) International publication number: WO9403832

(57) **Abstract**

In an optical path, a transparent substrate and a solution containing metal ions are arranged to block the optical path. By electrochemical reaction or chemical reaction, the metal ions are deposited on the surface of the transparent substrate. Thus, light is reflected from the surface of the transparent substrate. In this way, this optical switch changes the optical path. Using the solution as an electrolyte and the transparent substrate as an electrode, it is possible to deposit metal ions by an electrolytic reaction. Thus, the optical system can be set up as a closed system without requiring any mechanical movement thereby to provide a highly reliable switch at a low cost.

## Description

### FIELD OF THE INVENTION

The present invention relates to an optical switch for changing an optical path.

### PRIOR ART

As a conventional optical switch, for example, Japanese Patent KOKAI Publication No. 46707/1989 discloses an optical switch in which a groove is formed in an optical path and light is propagated straightly, or propagated in a direction perpendicular to the original path direction or switched with total reflection of light, by filling or withdrawing a liquid having a different refractive index from that of the optical path. As an optical switch utilizing an electrode reaction, Japanese Patent KOKAI Publication No. 275529/1992 proposes an optical switch which utilizes a change of refractive index caused by an electrochromic reaction.

The system of the optical switch proposed in Japanese Patent KOKAI Publication No. 46707/1989 cannot be a closed system since the liquid having the different refractive index should be filled or withdrawn, so that its reliability is problematic since the system may be contaminated when it is used for a long time. In addition, since a mechanism for filling and withdrawing the liquid should be mechanically driven using, for example, a pump, a size of the device becomes large.

In the case of the optical switch using the electrochromic effect, absorption loss of light due to absorption specific to an electrochromic material tends to occur. Since the switching is effected by the change of refractive index, it is difficult to achieve highly efficient cross talk characteristics.

An object of the present invention is to provide an optical switch having a novel structure, which solves the above problems of the prior arts.

### SUMMARY OF THE INVENTION

The present invention intends to solve the above problems by an optical switch comprising a transparent substrate and a solution containing a metal ion which are provided in a part of an optical path to interrupt said optical path, wherein said metal ion is deposited on a surface of said transparent substrate whereby light is reflected on said surface to change the optical path.

Further, the present invention provides an optical switch comprising a closed cell which is provided in a part of an optical path, a transparent electrode provided in said closed cell to interrupt said optical path, a metal electrode which is provided in said closed cell at a position which does not interrupt said optical path, and an electrolytic solution containing at least an ion of a metal which is the same as the metal electrode being filled in said closed cell, wherein an electrode reaction is effected between said metal electrode and said transparent electrode to form reversibly a metal reflecting film on a surface of said transparent electrode, and light is switched according to the presence or absence of said reflecting film.

An ionization tendency of the metal ion to be deposited on the transparent electrode is preferably not smaller than Ag and not larger than Zn.

In the present invention, when heavy water is used in the electrolytic solution, interfering absorption due to OH groups can be shifted when the optical switch is used in a wavelength range of 1.3 to 1.55 µm which is a common optical communication wavelength range.

The use of a solid electrolyte as the above electrolytic solution is preferable for the production of a device since no liquid sealing means is required.

In the present invention, when refractive indexes of the electrolytic solution, the transparent electrode and the closed cell are the same as that of the material forming the optical path, reflection loss is suppressed, which is advantageous for the light transmission characteristics.

Further, when a coating which is insulating and has no ion transmission is formed on an area of the transparent electrode except a part corresponding the optical path, an electrolysis deposition reaction on an unnecessary area is prevented, and a switching speed is advantageously increased. In addition, lead wires connected to the transparent electrode are protected.

### BRIEF DESCRIPTION OF THE DRAWINGS

Fig. 1 is a schematic view of one embodiment of the optical switch of the present invention.

Fig. 2 is a partial cross sectional view of the optical switch of Fig. 1 in which the metal reflection film is deposited on the transparent electrode.

Fig. 3 is a schematic view of another embodiment of the optical switch of the present invention.

Fig. 4 explains steps of a specific production method of the optical switch of Fig. 3 in Example 3 according to the present invention.

### DETAILED DESCRIPTION OF THE INVENTION

The optical switch of the present invention will be explained in detail by making reference to the drawings.

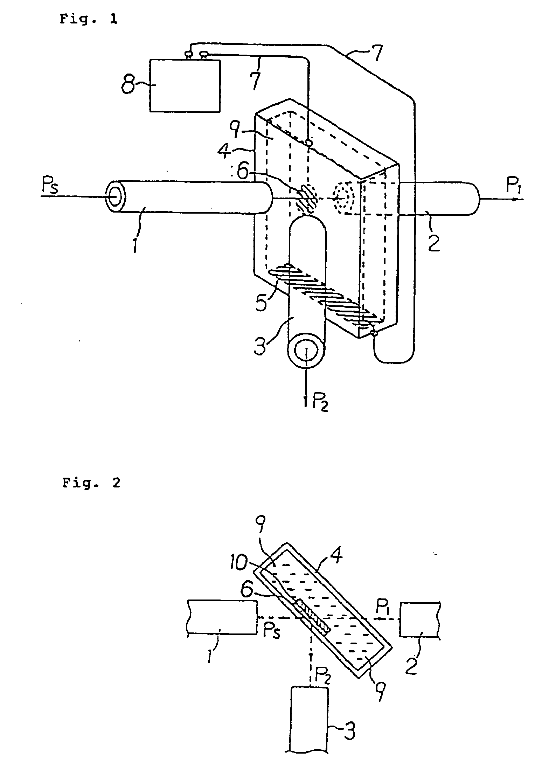

Fig. 1 shows one embodiment of the optical switch of the present invention, which comprises an optical waveguide 1 which guides an incident light, an optical waveguide 2 which receives a transmitted light, an optical waveguide 3 which receives a reflected light, a thin wall closed cell 4 made of quartz glass, a metal electrode 5 placed on a bottom of the cell, a transparent electrode 6 formed on an inner surface of the cell, lead wires 7, a direct current source 8 positive and negative electrodes of which can be reversed, and an electrolytic solution 9 in which an ion of a metal that is the same as the metal electrode 5 is dissolved and which is filled in the thin wall closed cell.

Hitherto, as an electrolysis technique using the transparent electrode, there is known a method for measuring a change of absorbance of a transmitted light due to the electrolysis by filling the electrolytic solution in a thin wall glass cell in which the transparent electrode is provided, as disclosed in "ELECTROCHEMICAL ANALYSIS", Last Volume, page 292, Fig. 14.2 (authored by Akira Fujishima, Masuo Aizawa and Toru Inoue, published by Gihodo Publishing, 1984).

The present invention utilizes this principle of the electrochemical absorption spectrometry using the thin wall cell to provide an optical switch having the different structure from the conventional ones.

In general, since the surface of the metal deposited on the electrode is irregular, it cannot cause the total reflection effectively. Then, the present inventors have studied various methods for achieving a neat total reflection by the deposition of metal. As a result, it has been found that, when the metal is deposited on the transparent electrode having a smooth surface, a surface of the deposited metal film on the transparent electrode side provides a mirror surface having a high reflectance, and the present invention, which switches the light by totally reflecting the light at an interface between the transparent electrode and the metal reflecting film, has been completed.

Fig. 2 is a cross sectional view of the optical switch of Fig. 1 according to the present invention. When no film is deposited on the transparent electrode 6, the light outgoing from the optical waveguide 1 passes through the cell 4 and reaches the optical waveguide 2. In such state, the negative and positive electrodes of the direct current source 8 are connected to the transparent electrode 6 and the metal electrode 5, respectively, and the voltage is applied. Then, in the cell, the electrode reaction takes place with the transparent electrode 6 being a cathode and the metal electrode being an anode. When the metal electrode 5 and the electrolytic solution 9 are properly selected, the reduced metal is deposited on the surface of the transparent electrode 6 which functions as the cathode, to form the metal reflecting film 10. As a result, the outgoing light from the waveguide 1 is totally reflected on the interface between the transparent electrode 6 and the metal reflecting film 10 and received by the optical waveguide 3.

In the state that the metal reflecting film 10 is formed, when the voltage is applied with reversing the electrodes of the source 8, the transparent electrode 6 functions as the anode, so that the deposited metal is reionized and dissolved in the electrolytic solution. Then, the outgoing light again passes through the cell and reaches the waveguide 2.

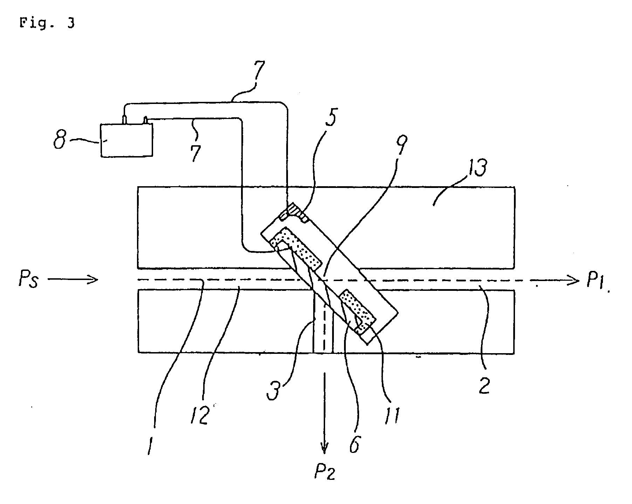

Fig. 3 shows another embodiment of the optical switch of the present invention, which comprises an optical waveguide 1 which guides an incident light, an optical waveguide 2 which receives a transmitted light, an optical waveguide 3 which receives a reflected light, a metal electrode 5 provided at a position which does not interrupt the light path, a transparent electrode 6, lead wires 7, a direct current source 8 positive and negative electrodes of which can be reversed, an electrolytic solution 9, and a core 12 (waveguide). In this embodiment, there is used a solid electrolyte in which the same metal ion as the metal electrode is dissolved.

A coating film 11 prevents excessive electrolysis deposition reaction on the transparent electrode 6. A cladding 13 of the waveguide has a groove which intersects with the waveguide at an angle of 45°, and has the cladding function and also a cell function to hold the solid electrolyte 9.

Whether or not the optical switch of the present invention has the reversibility depends on the selection of the electrolytic solution and the metal ion to be deposited. When the ionization tendency of the metal ion is too high, first the hydrogen ion is reduced and hydrogen gas is generated on the cathode, and the metal is hardly deposited. When the ionization tendency of the metal ion is too small, first the hydroxy ion is oxidized and oxygen gas is generated, and the once deposited metal film is hardly reionized. To keep the reversibility of the switch optimum, preferably the metal has a moderate ionization tendency, that is, the ionization tendency close to that of the hydrogen ion. Preferably, the metal to be deposited has an ionization tendency of not smaller than Ag and not larger than Zn. Examples of such metal are Ag, Cu, Sn, Pb, Fe, Zn, etc.

The electrolytic solution itself comprises a solvent, the metal ion which functions as a cation, and an anion as a counter ion.

To induce the electrode reaction, it is necessary for the metal ion and the counter ion to have a certain degree of solubility in the solvent.

As the solvent, water is usually used, while nonaqueous solvents such as acetic anhydride, methanol, dimethyl sulfoxide (DMSO) and the like may be used.

Since the electrolytic solution is positioned to interrupt the optical path in the transmitting state as shown in Fig. 2, it is desirable for the electrolytic solution to have a high transparency in the wavelength range to be used. In particular, when water is used as the solvent, since water has large absorbance in the common optical communication wavelength range of 1.3 to 1.55 µm. Then, when the optical switch is used in this wavelength range, heavy water is preferably used as the solvent to shift the absorbing wavelength.

As the counter ion to the metal ion, SO₄²⁻ NO₃⁻, Cl⁻, and the like are exemplified, and a suitable ion is selected so that a high solubility is achieved when it is combined with the used metal ion and the solvent. When water is used as the solvent, ZnSO₄, CuSO₄, AgNO₃ and the like are the preferred combinations.

To avoid the generation of gas as explained above, a pH regulator such as an acid or an alkali may be added to the electrolytic solution to shift a hydrogen overvoltage or an oxygen overvoltage.

To increase a density of conducting current, a strong electrolyte such as KCl may be added to the electrolytic solution.

In the present invention, the electrolytic solution may not necessarily be in a liquid state, while it may be a so-called solid electrolyte comprising a porous polymer material in pores of which, a sol or gel state electrolyte solution consisting of the solvent and the ionic conductor is filled. As the porous polymer material used in the solid electrolyte, any known material for the solid electrolyte such as a material prepared by heating and dissolving a polymer such as polyolefin, polytetrafluoroethylene, polyvinylidene fluoride, polycarbonate or polyester in liquid paraffin, quenching the mixture and extracting it. To form the sol or gel state electrolytic solution, polyoxyethylene dimethyl ether and the like as the solvent, and a metal ion acting as a cation as the ionic conductor are filled. As the ionic conductor other than the metal ion, a strong electrolyte such as lithium fluoride, KCl and the like may be filled. The strong electrolyte has an effect to increase a current density, namely increase the switching speed.

Irrespective of the liquid or solid, the electrolytic solution used according to the present invention is required to have a considerably high transmission factor, for example, at least 80 %, in a wavelength range to be used.

In Fig. 1, the metal electrode is placed on the bottom of the cell, while it may be positioned at any place which is not contacted to the transparent electrode in any shape. To stably effect the reversible reaction, the metal species is preferably the same as the metal ion contained in the electrolytic solution.

Examples of the metal for the metal ion are Zn, Cu, Ag, In and the like, and examples of the combination of the metal ion, the metal electrode and the counter ion are an Zn electrode and ZnSO₄ or ZnCl₂, a Cu electrode and CuSO₄ or Cu(NO₃)₂, a Ag electrode and AgNO₃, an In electrode and InCl₂, and the like. Among them, the combination of the Zn electrode and ZnSO₄, the Cu electrode and CuSO₄, and the Ag electrode and AgNO₃ are preferred.

Since the transparent electrode of the present invention is placed at least in a position where the incident light reaches on the incident side surface of the cell, not only the area where the incident light passes as shown in Fig. 1 but also all the incident side surface of the cell may be formed as the transparent electrode. But, to effect the switching reaction by electrolysis quickly, the transparent electrode has a small area preferably.

As the transparent electrode material, a material having a high transmittance in the wavelength range of the guided light. Preferred examples are oxide semiconductors such as In₂O₃, SnO₂, and the like, while an electrode comprising a transparent material such as a quartz plate on which a metal having a comparatively low ionization tendency such as Au, Ag, Pt, etc. is thinly deposited may be used.

When the transparent electrode has a too large surface area, it takes long time to form the total reflection film by the deposition, and the switching time is prolonged. Therefore, areas other than the part where the light path is interrupted are coated by a coating film to prevent the proceeding of the deposition reaction. As the coating film, a film which is insulating and has no ion transmittance and good corrosion resistance. For example, polycarbonate, polymethyl methacrylate (PMMA), a fluororesin, and the like are preferred. The coating film is also useful for the purpose of protecting the lead wires, and connections between the lead wires and the transparent electrode, since when the lead wires are directly contacted to the electrolytic solution, a noble meal such as gold or platinum should be used as the lead wire to prevent the corrosion of the lead wire.

The cell of the present invention is preferably made of a material having high light transmittance such as quartz glass. To prevent evaporation or contamination of the electrolytic solution, the cell is preferably closed tightly. The shape of the cell may be arbitrary insofar as the side surfaces through which the light passes are smooth. To minimize the absorption loss of light, preferably a thickness of the cell part where the light passes is made as small as possible.

Since the light passes through the cell, the transparent electrode and the electrolytic solution in the optical switch of the present invention, when the refractive indexes of two of them are different, the light is reflected on the surface, which causes excessive loss. Therefore, all the refractive indexes of these parts or materials are designed to be the same as that of the material constituting the optical path.

To deposit the metal from the solution in the present invention, a chemical reduction reaction such as a silver mirror reaction may be utilized in addition to the above explained electrolysis reaction.

### EXAMPLES

The present invention will be illustrated by the following Examples.

### Example 1

Using a quartz glass plate having a thickness of 0.5 mm, a quartz cell having an inner size of 0.5 mm x 10 mm x 10 mm as shown in Fig. 1 was made. On the bottom of the cell, a copper plate was provided as a metal electrode, and on the inner wall on the side where the incident light reaches, a transparent electrode of a Au thin film having an area of 5 mm x 5 mm was provided. The transparent electrode was formed by sputtering deposition of Au on the quartz plate as the side plate before assembling the cell. Lead wires were silver soldered to the respective electrodes, and the exposed parts of the lead wires were coated by a resin to prevent the excessive electrode reaction on the exposed parts.

In the assembled cell as above, a 10 wt. % aqueous solution of CuSO₄ was filled, and an upper opening was sealed.

A pair of GI (graded index) optical fibers each having a core diameter of 50 µm and a glass diameter of 125 µm were placed with facing the respective ends at a distance of 3 mm. In the gap between the optical fiber ends, the cell was placed with slanting it at an angle of 45° from the optical axis. The third GI optical fiber was placed in the direction in which the light reflected on the transparent electrode surface was propagated to set up the optical system shown in Fig. 1.

From the incident edge of the optical fiber 1 for light incidence of this optical system, light of 1.3 µm LD having a light intensity PS was introduced, and the light power P₁ on the transmitted side and the light power P₂ on the reflected side were measured. In the original state, a separation ratio P₁:P₂ on the output side was 1:0.

Under such condition, a voltage of 2 V was applied by the direct current source 8 so that the transparent electrode 6 acted as the cathode. After 30 seconds, the switching occurred, and the separation ratio P₁:P₂ on the output side was 0:1.

Further, the positive and negative electrodes of the direct current source were reversed and the voltage of 2 V was applied. The switching occurred after 30 seconds, and a separation ratio P₁:P₂ on the output side was 1:0.

### Example 2

The same optical system as in Example 1 was assembled except that a Zn plate was used as the metal electrode and a 10 wt. % aqueous solution of ZnSO₄ was used as the electrolytic solution. In the original state, the separation ratio P₁:P₂ on the output side was 1:0.

Under such condition, a voltage of 2 V was applied by the direct current source 8 so that the transparent electrode 6 acted as the cathode. After 30 seconds, the switching occurred, and the separation ratio P₁:P₂ on the output side was 0:1.

The positive and negative electrodes of the direct current source were reversed and the voltage of 2 V was applied. The switching occurred after 30 seconds, and a separation ratio P₁:P₂ on the output side was 1:0.

### Example 3

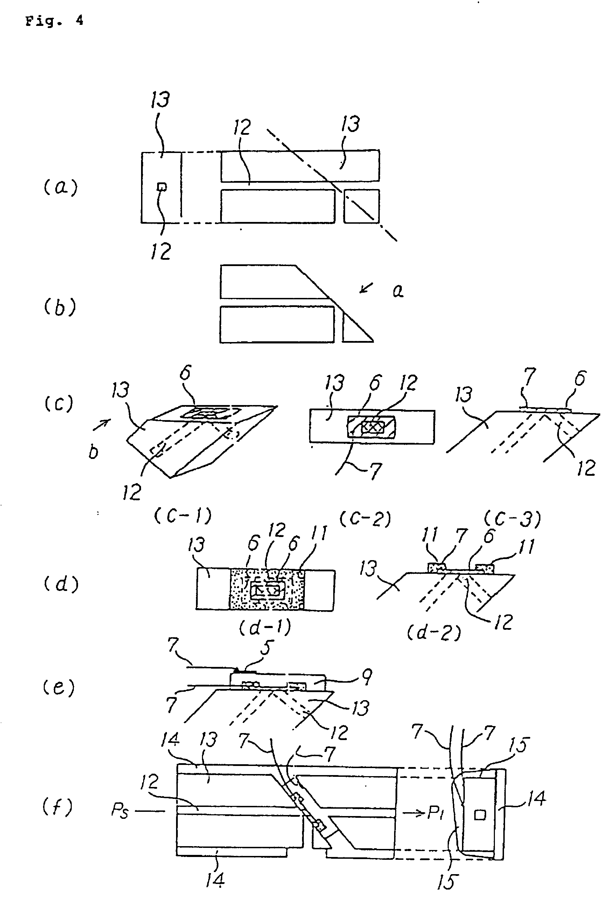

In this Example, a plastic optical waveguide was processed to produce an optical switch of Fig. 3.
i) First, as shown in the part (a) of Fig. 4, a plastic optcal waveguide having a T shaped core (optical path) is produced. Many methods are known for the formation of the core in a plastic substrate. In this Example, according to the procedures described in Kurokawa et al, "Polymer Optical Circuits for Multiple Optical Fiber Systems", Applied Optics, Vol. 19, No. 18, 3124-3129 (1988), in a bisphenol Z polycarbonate substrate, methyl acrylate is added as a low refractive index dopant, only a cladding portion is irradiated by light, the substrate is heated to remove methyl acrylate in the layer to obtain an optical waveguide having a T shaped core with a size of 500 µm x 500 µm, which has a core refractive index of 1.59 and a cladding refractive index of 1.56. The left and right sides of the part (a) of Fig. 1 are the front view and the plan view of the waveguide, respectively.
   In Fig. 4, numerals 12 and 13 stand for the core and the cladding, respectively.
ii) The waveguide is cut along a plane passing the connection of the core 12 at an angle of 45° as shown in the part (b) of Fig. 4, and the cut surface is polished.
iii) To cover the exposed core 12, a transparent conductive film consisting of an ITO (Indium-Tin-Oxide) deposition film having a thickness of 12 µm is adhered and a platinum lead wire 7 is bonded (the part (c) of Fig. 4). In the part (c) of Fig. 4, the (c-1) is a perspective view, the (c-2) is a view from the arrow "a" in the part (b), and the (c-3) is a view from the arrow "b" in the (c-1).
iv) Then, a coating film 11 having a thickness of 50 µm is provided to cover the lead wire 7 and the transparent electrode 6 with leaving the core 12 uncovered (the part (d) of Fig. 4). The transparent electrode 6 and the coating film 11 are both made of the same bisphenol Z polycarbonate as the coating component. In the part (d) of Fig. 4, the (d-1) is a view from the arrow "a", and the (d-2) is a partial cross sectional view.
v) Over the coating film, a solid electrolyte 9 is placed, which consists of a porous polymer film of polyolefin having an average molecular weight of 5 x 10⁵ containing, in its pores, a mixture of polyoxyethylene dimethyl ether having an average molecular weight of 500, lithium fluoride and copper sulfate. On the solid electrolyte, a metal electrode 5 consisting of a copper plate to which a platinum wire is bonded is placed. The part (e) of Fig. 4 shows a partial cross sectional view.
vi) On a substrate 14, the whole system is fusion bonded, and the rest of the cladding and the core which are cut apart in the part (b) of Fig. 4 is bonded after polishing a thickness of 50 µm which corresponds to the thickness of the solid electrolyte film.
   From one end, the incident light P₃ is illuminated and the relative position of the both claddings is adjusted so that the intensity of the transmitted light P₁ is maximized. Thereafter, the whole system is fixed using an epoxy resin 15 to obtain the optical switch of Fig. 3. The part (f) of Fig. 4 shows the plan view and the front view of the switch.
vii) From the incident end of the optical switch which is assembled in the steps i) to vi), light having a wavelength of 0.658 µm and an intensity of 3 mW was introduced, and the light powers P₁ and P₂ were measured. In the original state, a separation ratio P₁:P₂ on the output side was 1:0. Under such condition, a voltage of 2 V was applied by the direct current source 8 so that the transparent electrode 6 acted as the cathode. After 20 seconds, the switching occurred, and the separation ratio P₁:P₂ on the output side was 0:1.

As is clear from the results in Examples 1 to 3, the optical switch of the present invention has a sufficient switching function.

### EFFECTS OF THE INVENTION

As explained above, the optical switch of the present invention requires no mechanical action and can form the optical system as the closed system, so that the present invention can provide an economical and reliable optical switch.

## Claims

1. An optical switch comprising a transparent substrate and a solution containing a metal ion which are provided in a part of an optical path to interrupt said optical path, wherein said metal ion is deposited on a surface of said transparent substrate whereby light is reflected on said surface to change the optical path.

2. An optical switch comprising a closed cell which is provided in a part of an optical path, a transparent electrode provided in said closed cell to interrupt said optical path, a metal electrode which is provided in said closed cell at a position which does not interrupt said optical path, and an electrolytic solution containing at least an ion of a metal which is the same as the metal electrode being filled in said closed cell, wherein an electrode reaction is effected between said metal electrode and said transparent electrode to form reversibly a metal reflecting film on a surface of said transparent electrode, and light is switched according to the presence or absence of said reflecting film.

3. The optical switch according to claim 1, wherein said electrolytic solution comprises heavy water.

4. The optical switch according to claim 2, wherein said electrolytic solution consists of a solid electrolyte which comprises a porous polymer in which an ionic conductor and a metal ion are filled.

5. The optical switch according to claim 2 or 4, wherein refractive indexes of said electrolytic solution, said transparent electrode and said closed cell are the same as that of a material forming the optical path.

6. The optical switch according to claim 2 or 4, wherein a coating which is insulating and had no ion transmission is formed on an area of said transparent electrode except a part corresponding the optical path.

7. The optical switch according to claim 2 or 4, wherein an ionization tendency of said metal ion to be deposited on said transparent electrode is not smaller than Ag and not larger than Zn.
